# EUROPEAN PATENT APPLICATION

(11) **EP 4 510 043 A1**
(43) Date of publication of application: **19.02.2025**
(21) Application number: 24194332.3
(22) Date of filing: 13.08.2024
(51) Int. Cl.: G06N 3/049, G06N 3/063, G06N 3/065

(54) **NEURON CIRCUIT**

(30) Priority: 16.08.2023 DE 102023003383
(71) Applicant: Gude, Michael, 50169 Kerpen (DE)
(72) Inventor: Gude, Michael, 50169 Kerpen (DE)
(74) Representative: Herrero & Asociados, S.L.

(57) **Abstract**

Convolutional neural networks (CNN) or spiking neural networks (SNN) are usually applied for implementation. Although CNNs can be realized purely digitally, they require a lot of energy due to the high processing power (MAC structures). SNNs can usually only be implemented with analog components and are therefore difficult to implement in circuits with a technology node below 10 nm.

The present disclosure is aimed to realize electronic neurons that process pulse-width modulated signals. These neurons encode the analog value in the length of the pulse and can be processed digitally.

The combination of these neurons with an FPGA is particularly advantageous. The routing structure of the FPGA can further be configured for forwarding the pulse-width modulated signals. The configuration data of the FPGA can further be used alternatively for the weight data of the neurons.

## Description

The state of the art in artificial intelligence (AI) is determined by neural networks (NN), which are circuit representations of real neurons in the brain, so as to emulate these parts of the brain as well as possible to achieve intelligence similar to that of humans in a circuit implementation.

The main challenges are the speed of signal processing of the neuron, the size of the neuron, and the energy consumption required to operate such an artificial brain.

For the state of the art in artificial intelligence, it is important to know the basic concepts of the different neural networks.

Among them, the most widely used is a so-called "convolutional neural network" (CNN), configured to realize "deep learning", i.e. a learning process similar to that of the brain. In biology, this is comparable to a learning child.

CNNs have the broadest application in image processing and image recognition. The advantage of CNNs is the fact that they are completely mathematically describable, which makes it possible to implement them digitally on digital computers or even better in Field Programmable Gate Arrays (FPGA).

CNNs are easy to implement in digital environments but have the major disadvantage that the computational effort is considerable due to the existence of Multiply Accumulate (MAC) circuits. Further, there are bottlenecks in memory access. In addition, they have a high specific power consumption.

There is another class of neural networks that can extend the concept of neural networks by the factor of time or simultaneity. These spiking neural networks (SNNs) are more related to the real biological model.

As the name suggests, the information is not represented by digital numbers, but by impulses of different height and time. As the spikes can be very short in time, the SNNs can work much faster than CNNs. In addition, the power consumption of the SNNs is much lower compared to CNNs.

In summary, CNNs require massive digital computing power to implement; SNNs require analog circuits that are impossible or very difficult to implement in highly integrated circuits with structure widths of less than 10 nm.

The present disclosure is aimed to propose advanced neurons that can be realized in highly integrated chips.

According to the present disclosure, the above subject is solved by the features listed in the appended claims.

In principle, in the present disclosure, the data (signals) to be processed are neither represented by a binary word, as is usual with CNNs, nor by spikes of different amplitude, as is usual with SNNs.

The analog data is represented by pulses of different lengths. The data value is coded in the length of the pulse.

This method of representation has serious advantages for processing the data, as the pulses can be forwarded purely digitally. Furthermore, they use only one signal line regardless of the analog value range.

Integrated electronic neurons, whose input and output signals are pulse-width modulated, are therefore used as a fundamental feature of the present disclosure.

The weight data, which is configured to evaluate, i.e. multiply, the pulse-width modulated input data, is applied digitally to the neuron and converted into a current by tristate buffers staggered and ordered according to corresponding driver strength.

The current generated by the tristate buffers is configured to charge and/or discharge a capacitance and the resulting voltage is converted into a pulse of varying length by a buffer with or without hysteresis.

It is particularly advantageous when the neurons are realized in an FPGA and are connected in a configurable manner via routing structures commonly applied for FPGAs.

In this case, the FPGA configuration data can be at least partially used.

For example, the weight data of the neurons is at least partially used from the configuration data of a configurable logic block of an FPGA.

In particular, the weight data of the neurons is shared from the configuration data for Look Up Tables (LUTs) of a configurable logic block of an FPGA.

Flexibility is enhanced if the number of neuron inputs is configurable.

In a chip implementation, the use of a configurable logic block or a neuron can be configured at any point.

"Configurable" means that the setting can be set by a configuration data stream.

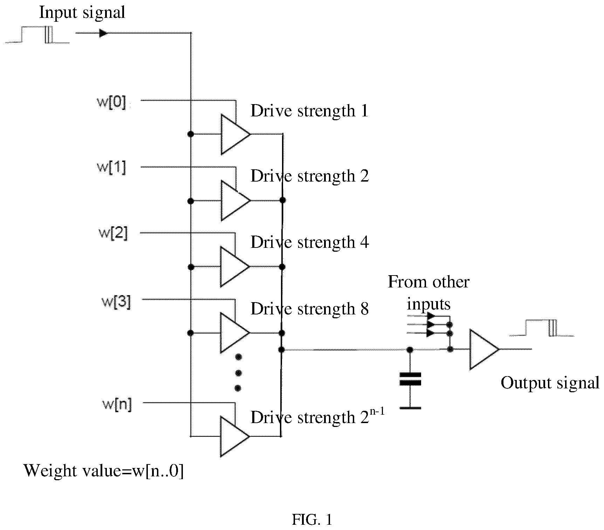

FIG. 1 is a schematic view of an implementation of a neuron (with only one input shown) according to the present disclosure.

## Claims

1. A neuron circuit, **characterized in that**,
integrated electronic neurons, whose input and output signals are pulse-width modulated, are applied.

2. The neuron circuit according to claim 1, wherein,
weight data for evaluating pulse-width modulated input data are applied digitally to the neurons and are converted into a current by tristate buffers staggered and ordered according to driver strength.

3. The neuron circuit according to claim 2, wherein,
the current generated by the tristate buffers is configured to charge and/or discharge a capacitance and a resulting voltage is converted into a pulse of different length by a buffer with or without hysteresis.

4. The neuron circuit according to one or more of the preceding claims, wherein,
the neurons are connected in a configurable manner via routing structures commonly applied for Field Programmable Gate Arrays (FPGAs).

5. The neuron circuit according to claim 2, wherein,
the weight data of the neurons are at least partially shared from configuration data of a configurable logic block of a Field Programmable Gate Array (FPGA).

6. The neuron circuit according to claim 2, wherein,
the weight data of the neurons are shared from configuration data for Look Up Tables (LUTs) of a configurable logic block of a Field Programmable Gate Array (FPGA).

7. The neuron circuit according to one or more of the preceding claims, wherein,
the number of inputs of the neurons is configurable.

8. The neuron circuit according to one or more of the preceding claims, wherein,
use of a configurable logic block or a neuron is configurable.
